# EUROPEAN PATENT SPECIFICATION

(11) **EP 1 466 420 B1**
(45) Date of publication and mention of the grant of the patent: **01.12.2010**
(21) Application number: 02720819.8
(22) Date of filing: 18.01.2002
(51) Int. Cl.: H04B 1/707

(54) **IMPROVED TIME TRACKING LOOP**
VERBESSERTE ZEITNACHFÜHRSCHLEIFE
BOUCLE DE POURSUITE DE SYNCHRONISATION AMELIOREE

(43) Date of publication of application: 13.10.2004
(73) Proprietor: QUALCOMM INCORPORATED, San Diego, CA 92121-1714 (US)
(72) Inventor: BLESSENT, Luca, San Diego, CA 92122 (US)
(74) Representative: Wagner & Geyer
(86) International application number: PCT/US2002/001554
(87) International publication number: WO 2003/063377

(56) References cited:
- US-A- 6 141 372

## Description

### Background of the Invention

### Field of the Invention

The invention relates to communications. More particularly, the invention relates to a novel and improved method and apparatus for synchronizing a communication signal timing with a timing of a receiver that receives the communication signal.

### Description of the Related Art

Code division multiple access (CDMA) modulation is one of several techniques for facilitating communications in which a large number of system users are present. Although other techniques such as time division multiple access (TDMA), frequency division multiple access (FDMA), and AM modulation schemes such as amplitude companded single sideband (ACSSB) are known, CDMA has significant advantages over these other techniques.

CDMA modulation allows a large number of mobile telephone system users, each having a transceiver, to communicate through satellite repeaters or terrestrial base stations (also known as cell-site stations, or cell-sites) using CDMA spread spectrum communication signals. In using CDMA communications, the frequency spectrum can be reused multiple times, thus permitting an increase in system user capacity. For example, the signal from each user may be multiplied by a distinct signature waveform before transmission. The signature waveform is a signal which has a much larger bandwidth than the information bearing signal from the user. The transmitted signal is thus a spread spectrum signal, and CDMA is a spread spectrum technology. All users use different signature waveforms to expand their signal bandwidth. As a result, the use of CDMA may result in a much higher spectral efficiency than can be achieved using other multiple access techniques.

A mobile receiver in a portable communication system operates in an environment that subjects the receive signal to numerous degradations. The signal transmitted from a signal source is subject to numerous conditions, such as attenuation, interference, scattering, and reflections, prior to arrival at a receiver. The receiver must be able to recover the signal in spite of all these degradations, in order for a successful communication link to be established.

Structures, such as buildings and surrounding terrain, including walls and hillsides, contribute to the scattering and reflection of the transmitted signal. The scattering and reflection of the transmitted signal may result in multiple signal paths from the transmitter to the receiver. The contributors to the multiple signal paths change as the receiver moves.

In order to accurately decode a signal from a CDMA mobile unit the signal timing must be synchronized with the base station timing. As the mobile unit moves further away from the base station the signal takes an increasingly long period of time to reach the base station and if no timing adjustments are implemented at the base station an incoherent or attenuated signal will be received. In addition, if the weather conditions change so as to increase the signal attenuation, the timing of the incoming signal may be further displaced from the timing expected at the base station.

A Time Tracking Loop (TTL) is commonly used to acquire and track the timing of a signal received at the base station in order to synchronize the base station timing with the received signal timing. After a coarse estimate of the timing offset is made, the TTL may be used to refine the estimate and to track dynamic variations of the offset due to code doppler, pseudo-noise ("PN") slewing, or other effects. In general, a TTL comprises two synchronization phases, namely, an acquisition phase and a tracking phase. During the acquisition phase the TTL needs to rapidly correct for the initial timing error. Subsequently, after the TTL converges to a timing estimate that is reasonably close to the received signal timing reference, the acquisition phase ends and the tracking phase begins. In the tracking phase the TTL follows slow variations of the timing of the received signal. In general, the faster the acquisition phase, the higher the standard deviation of the residual timing error in the tracking phase. In other words, a signal received by a TTL that has a shortened acquisition phase will have an increased standard deviation during the tracking phase.

A TTL commonly operates by measuring an energy or magnitude difference in an early signal sample and a late signal sample. This difference may then be used to determine if the base station timing should be adjusted forward or backwards. For example, if the late signal sample has a higher energy than the early signal sample, the base station timing should be adjusted forward, closer to the higher energy signal. This process, however, may require a considerable length of time to accurately lock on to the signal timing. This problem may be decreased somewhat through the process of accumulating signal samples over disjoint time intervals before adjusting the base station timing. However, in low SNR situations use of this method may not sufficiently decrease the signal acquisition phase. Furthermore, even if the signal acquisition phase is decreased, the standard deviation of the timing error will likely increase, according to general principles of TTL's.

Therefore, a system for decreasing the acquisition phase time of a TTL without increasing the standard deviation of the error signal during the subsequent tracking phase of the TTL is desired.

Attention is drawn to US-A-6 141 372 which describes a system for digitally downconverting and despreading a multi-channel analog direct sequence spread spectrum signal. The system includes a free-running, non-steering, clock generator which outputs an A/D sample clock, and an A/D sample clock having a rate which is an integral multiple of a chip rate of the spread spectrum signal. An A/D converter which receives the spread spectrum signal and the A/D sample clock and outputs a digitized multi-channel signal from the multi-channel spread spectrum signal, and a local pseudo-noise sequence signal source which outputs M local pseudo-noises, wherein M is an integer greater that 1 is also included. A multi-channel complex downconverter/polyphase filter which receives the digitized multi-channel signal and the A/D sample clock and a sample timing phase control signals, simultaneously filters and downconverts the digitized multi-channel signal to baseband, corrects timing phase misalignment between the digitized multi-channel signal and the locally generated pseudo-noise sequences, and outputs a multi-channel complex corrected baseband signal is provided.

### Summary of the Invention

In accordance with the present invention a method of tracking a received communication signal, as set forth in claim 1 and a system for tracking a received communication signal, as set forth in claim 12, are provided. Preferred embodiments are disclosed in the dependent claims.

Embodiment disclosed herein addresses the above mentioned problem through the use of overlapping sample accumulations. In one aspect, a TTL coupled to a signal receiver uses overlapping sample accumulations in order to acquire and track a received spread spectrum signal with increased speed and accuracy. In one embodiment, sample accumulations are formed by grouping together a predetermined number of consecutive samples. Sample accumulations are groups of samples. Overlapping sample accumulations may be created by overlapping a predetermined portion of adjacent sample accumulations. In one embodiment, 50% of adjacent sample accumulations are overlapped such that the latter half (50%) of a first sample accumulation is overlapped by the first half (50%) of a second sample accumulation. Other predetermined portions of adjacent sample accumulations, such as 25% or 75%, may be overlapped also. After the overlapping sample accumulations are created they are transmitted to the TTL in order to determine a timing error indicative of the difference between the timing of the received spread spectrum signal and the signal receiver timing.

In one embodiment, the TTL includes a timing discriminator which creates an early overlapping accumulation signal and a late overlapping accumulation signal. In another embodiment, an early and late signal are created by a psuedo-noise despreader using advanced and delayed pseudo-noise offsets. Subsequently, early and late overlapping signal accumulations are created using the early and late signals, respectively.

The TTL compares the early and late overlapping accumulation signals in order to determine an updated timing error. The receiver timing is thereafter periodically adjusted according to the timing error determined by the TTL.

By overlapping the accumulations of samples, adjustments to the system timing may be made more rapidly than if disjoint samples are used. A system using overlapping accumulations may provide a similar standard deviation of a tracking error in a tracking phase as a system using disjoint accumulations having a longer acquisition phase. Likewise, when compared to a system using disjoint accumulations, the use of overlapping accumulations may provide a decreased standard deviation of tracking error in the tracking phase when the length of the acquisition phases are the same.

These and other objects and features of the invention will become more fully apparent from the following description and appended claims taken in conjunction with the following drawings, where like reference numbers indicate identical or functionally similar elements.

### Brief Description of the Drawings

Figure 1 illustrates an exemplary communication system which utilizes CDMA modulation techniques in communications between mobile users and cell-sites.

Figure 2 is a functional block diagram illustrating a timing error signal generator.

Figure 3 is a block diagram illustrating an improved method of synchronizing the receiver timing with the mobile unit timing.

Figure 4 is a block diagram illustrating the functional components of a TTL.

Figure 5 is a graph illustrating a comparison of the standard deviation of residual timing error for a TTL using 50% overlapped accumulations and a TTL using disjoint accumulations.

### Detailed Description of the Invention

The following presents a detailed description of embodiments of the invention. However, the invention can be embodied in a multitude of different ways as defined and covered by the claims. The invention is more general than the embodiments that are explicitly described, and is not limited by the specific embodiments but rather is defined by the appended claims.

For simplicity and clarity of disclosure, the invention will be disclosed with reference to an exemplary CDMA wireless communication system operating in accordance with the principles outlined in the CDMA2000 standard. However, it should be understood that the inventive principles described herein are equally applicable to other wireless communication systems that employ spread spectrum signals. For example, a the invention is applicable to systems using a punctured or discontinuous pilot channel. Various embodiments of the invention are equally applicable to the wideband CDMA (W-CDMA) standard(s), as well as many of the other proposed 3G communication standards. In addition, while the embodiments herein will generally be discussed with respect to a reverse pilot signal, as used in a CDMA2000 system, the specific embodiments may be applied to any received signal, including a data carrying signal, whether the signal is received by the base station, mobile unit, or another cellular signal receiving site.

The term "bit" or "bits" as used herein is often used alongside the term "chip" or "chips". It will be understood by one of ordinary skill in the art that "bit" refers to a unit of information, whereas "chip" refers to a unit of the spreading code used in a CDMA system. However, the use of the term "chip" herein is merely for accuracy in explanation and is not intended to limit the invention to CDMA systems. The invention is equally applicable to systems that do not spread "bits" of information with "chips" of a spreading code.

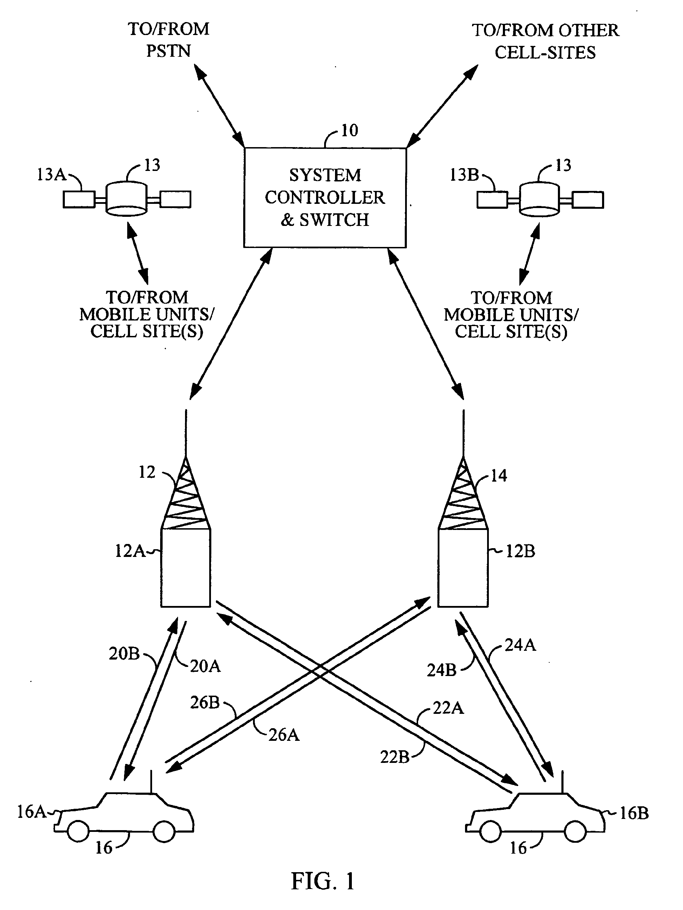

Figure 1 illustrates an exemplary communication system which utilizes CDMA modulation techniques in communications between the mobile users 16, and the cell-sites 12. Cellular systems in large cities may have hundreds of cell-site stations 12 serving hundreds of thousands of mobile telephones 16. The use of CDMA techniques readily facilitates increases in user capacity as compared to conventional FM modulation cellular systems.

In Figure 1, a system controller 10 typically includes a switch and appropriate interface and processing hardware for providing system control information to the cell-sites. Controller 10 controls the routing of telephone calls from the public switched telephone network (PSTN) to the appropriate cell-site for transmission to the appropriate mobile unit. Controller 10 also controls the routing of calls from the mobile units via at least one cell-site to the PSTN. Controller 10 may direct calls between mobile users via the appropriate cell-site stations since such mobile units do not typically communicate directly with one another.

Controller 10 may be coupled to the cell-sites by various means such as dedicated telephone lines, optical fiber links or by radio frequency communications. In Figure 1, two exemplary cell-sites, 12A and 12B, are illustrated, along with two exemplary mobile units 16a and 16b which include cellular telephones. Arrows 20a-20b and 22a-22b respectively define the possible communication links between cell-site 12A and mobile units 16. Similarly, arrows 24a-24b and arrows 26a-26b respectively define the possible communication links between cell-site 12B and mobile units 16. Cell-sites 12 normally transmit using equal power.

Cell-sites 12, in the typical case, are terrestrial base stations which define cell service areas. However, it should be understood that earth orbit relay satellites, such as satellites 13, may be used to provide more complete cellular coverage, particularly for remote areas. In the satellite case, signals may be relayed between the mobile users and the terrestrial base stations using satellites 13. As in the terrestrial only case, the satellite case also provides the ability for communication between a mobile unit and one or more base stations via multiple transponders on the same satellite 13 or through different satellites 13.

Mobile unit 16a measures the total received power in pilot signals transmitted by cell-sites 12 upon paths 20a and 26a. Similarly, mobile unit 16b measures the total received power in pilot signal as transmitted by cell-sites 12 upon paths 22a and 24a. In each of mobile units 16a and 16b, pilot signal power is measured in the receiver where the signal is a wideband signal. Accordingly, this power measurement is made prior to correlation of the received signal with a PN spectrum spreading signal.

When mobile unit 16a is closer to cell-site 12A, the received signal power will be dominated by the signal traveling path 20a. When mobile unit 16a is nearer to cell-site 12B, the received power will be dominated by the signal traveling on path 26a. Similarly, when mobile unit 16b is closer to cell-site 12B, the received power will be dominated by the signal on path 24a. When mobile unit 16b is closer to cell-site 12A, the received power will be dominated by the signal traveling on path 22a.

Each of mobile units 16 uses the resultant measurement, together with knowledge of the cell-site transmitter power and the mobile unit antenna gain to estimate the path loss to the closest cell-site. The estimated path loss, together with knowledge of the mobile antenna gain and the cell-site G/T may be used to determine the nominal transmitter power required to obtain the desired carrier-to-noise ratio in the cell-site receiver. The determination of the nominal transmitter power may be accomplished according to various different equations and is generally well known in the communication art. The knowledge by the mobile units of the cell-site parameters may be either fixed in memory or transmitted in cell-site information broadcast signals to indicate other than nominal conditions for a particular cell-site.

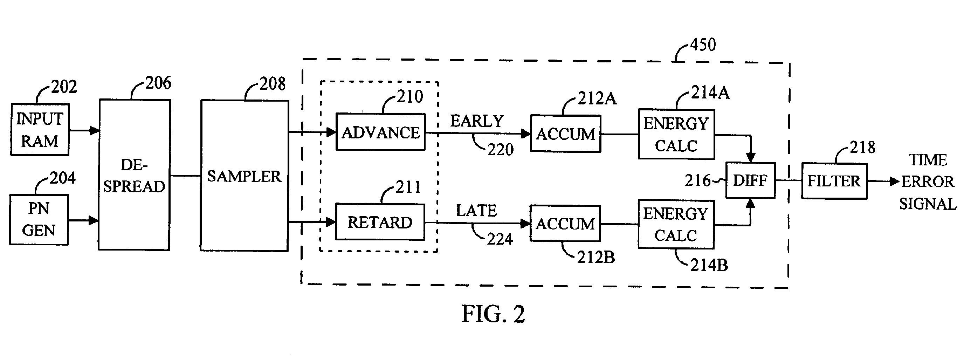

Turning now to Figure 2, a functional block diagram of a timing error signal generator is illustrated. As shown in Figure 2, input RAM 202 stores samples of the received waveform and provides them to a despreader 206 where they are despread using a PN code generated by PN generator 204. The process of generating a PN code and despreading a CDMA signal is well known in the communication art, and, thus, will not be discussed herein. Sampler 208 performs a periodic sampling of the despread signal from the despreader 206.

The input to timing discriminator 450 is a despread signal with a timing error Δτ*ₑ* defining the difference in the received signal timing and the receiver timing. Despreader 206 outputs a signal s(Δτ), which is then received by an advance module 210 and a retard module 211, which are used to create respective early and late signals. In general, the early signal comprises a sequence of despread chips that were despread with advanced PN offset while the late pilot signal comprises a sequence of despread chips that were despread with a delayed PN offset. In one embodiment the PN offset is one-half chip such that the early signal is one-half chip earlier and the late signal is one-half chip later than the received signal s(Δτ).

The early signal 220 and late signal 224 are respectively presented to accumulators 212A and 212B where overlapping accumulations are formed over a predetermined number of samples. The number of samples in an accumulation, or sample group, is implementation dependent and therefore an accumulation may comprise any number of samples. For example, one embodiment may use 64 samples per accumulation, while another embodiment may use 256 samples per accumulation. In addition, the amount of overlapping may be adjusted according to system requirements. Consecutive accumulations of samples are overlapped by an overlapping percentage P, which defines an amount of overlap between two consecutive accumulations of samples. For example, when P = 50%, the latter half (50%) of a first accumulation will be overlapped by the first half (50%) of a subsequent accumulation. By overlapping the accumulations of samples, adjustments to the system timing may be made more rapidly than if disjoint samples are used. In addition, a system using overlapping accumulations may provide a similar standard deviation of the tracking error in a tracking phase as a system using disjoint accumulations having a longer acquisition phase. Likewise, when compared to a system using disjoint accumulations, the use of overlapping accumulations may provide a decreased standard deviation of tracking error in the tracking phase when the length of the acquisition phases are the same.

The accumulated symbols output from accumulators 212A and 212B are then respectively input to energy calculators 214A and 214B. Energy calculators 214A and 214B calculate the energy contained in the accumulated symbols of the early and late pilots. For example, if the early and late pilots are QPSK-encoded, the energy calculators 214A, 214B calculate the energy using the relationship I² + Q², where I and Q are the in-phase and quadrature phase components of the signals, respectively. In one embodiment, energy calculators 214 calculate the magnitude of the energy, *i.e*., the square root of the energy calculations, contained in the early and late symbols. In addition, the calculation of magnitude may be approximated so that no significant delay is introduced by the energy calculators 214.

The difference between the energy in the early pilot and the late pilot is then calculated by subtractor 216 to generate a value indicative of the time tracking error of the PN generator 204 for the received signal. The resultant difference value output by subtractor 216 is filtered by filter 218 and provided as a time error signal for further use by other circuitry, such as adjustment of the PN generator timing, for example. Filter 218 may include an accumulator and/or other processing circuitry for smoothing the instantaneous variation in the time error signal.

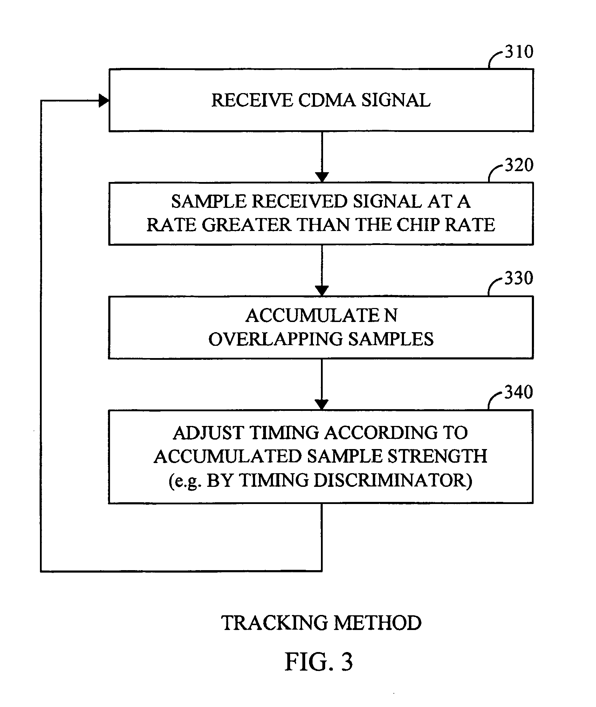

Figure 3 is a block diagram illustrating an improved method of synchronizing the timing of a receiver, *e.g*., the base station, with the timing of a mobile unit. As discussed above, one of the challenges of cellular communications is the synchronization of the received signal at the base station with the base station timing. If the timing is not synchronized, the received signal will be attenuated or completely incoherent. The time tracking loop of many existing communication systems adjusts the system timing according to an accumulation of disjoint signals over a period of time. However, this method may require a significant amount of time to effectuate a timing adjustment. The illustrated method in Figure 3 may significantly reduce the length of the acquisition phase of a TTL without increasing the standard deviation of the timing error in the subsequent tracking phase.

In step 310, the base station receives a CDMA signal from a mobile unit 16. The CDMA signal comprises a stream of data blocks that are typically encoded with voice data.

In step 320, samples of the incoming signal are taken at a rate greater than the chip rate of the system. A typical CDMA communication system has a chip rate R of 1.2288 MHz, thus transmitting 1.2288 Million chips per second. Therefore, if samples are taken at a rate of 2.4576 MHz, two samples will be taken during each chip time. If samples are taken at a rate of N x R, N samples will be taken during each chip time T. In an advantageous embodiment, samples are taken at a rate of 2 x R, thus sampling each chip twice. The samples may then be interpolated by a factor of M to further increase the number of samples available.

In step 330, samples are overlapped by the overlapping percentage P before entering the time tracking loop ("TTL"). As discussed above, the number of samples in an accumulation is implementation dependent and therefore an accumulation may comprise any number of samples. For example, one embodiment may use 64 samples per accumulation, while another embodiment may use 256 samples per accumulation. Thus, if P = 50%, the latter half (50%) of a first accumulation will be overlapped by the first half (50%) of a second accumulation. By overlapping the accumulations of samples, adjustments to the system timing may be made more rapidly than if disjoint samples are used. In addition, the use of overlapping accumulations may provide a similar standard deviation of the tracking error in a tracking phase as in a system using disjoint accumulation with a longer acquisition phase. Likewise, when compared to a system using disjoint accumulations, the use of overlapping accumulations may provide a decreased standard deviation of tracking error in the tracking phase when the length of the acquisition phases are the same.

In one embodiment, when overlapping samples are used in the TTL the update rate of the loop is improved by a factor of 1 / (1 - P). Therefore, by implementing an overlapping factor of P = .5, the TTL update rate of a system using overlapping accumulations may be improved by a factor of 1 / (1 - .5) = 2, thus doubling the TTL update rate. Other overlapping factors may be used also. For example, if P = .75 then the update rate of the TTL will be improved by a factor of 1 / (1 - .75) = 4. As a result of an increase update rate, the acquisition phase may decrease the tracking error more quickly than in a system with a slower update rate, *e.g*., a system using disjoint accumulations.

In step 340, the overlapped accumulations are used by a timing discriminator 450 (Figure 2) to generate a timing estimate, as discussed with reference to Figure 2, which is used to synchronize the base station and the received signal timing.

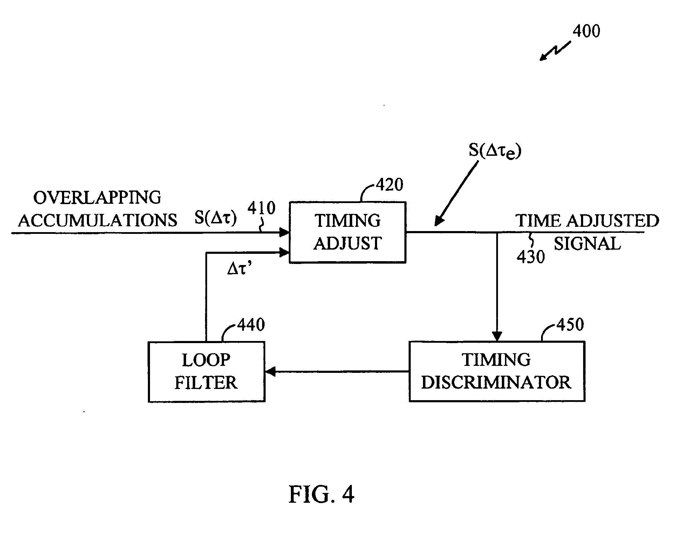

Figure 4 is a block diagram illustrating the functional components of a TTL. In one embodiment, the TTL 400 performs both the acquisition and tracking of the received signal timing.

The TTL 400 system is driven by a stream of accumulated overlapping samples 410 having a timing error of Δτ, indicating the difference between the received signal timing and the receiver timing. The overlapping accumulations are represented in the figures as s(Δτ). In general, overlapping of accumulations is accomplished by overlapping a portion P of a current sample accumulation starting at time t with a sample accumulation stored in the buffer that started at time t-1. The overlapping of accumulations is discussed above with reference to Figure 3.

The timing adjust module 420 performs the adjustment of the received signal timing according to the timing estimate Δτ' received from loop filter 440. In one embodiment, the timing of the received signal is delayed by the timing adjust module 420 in order to output a time adjusted signal 430 that approaches synchronization with the receiver timing. In another embodiment, the PN generator 204 timing is offset by an amount based on Δτ' so that the PN code is properly aligned with the received signal.

The time adjusted signal 430 has a residual timing error of Δτ*ₑ* = Δτ - Δτ', and may be represented as s(Δτ*ₑ*). Thus, s(Δτ*ₑ*) drives the TTL through the timing discriminator 450, for use in updating the timing estimate Δτ'. The timing discriminator 450 generates a new timing estimate Δτ' based on a comparison of early and late accumulations (see Figure 2), which is filtered by loop filter 440 and transmitted back to the timing adjust module 420.

During the initial acquisition phase of the TTL 400, the timing estimate Δτ' converges towards Δτ as Δτ' is updated in relatively large amounts. When the timing estimate Δτ and the timing error Δτ have become sufficiently close (*i.e.,* Δτ*ₑ* approaches zero) the acquisition phase ends and the tracking phase begins. During the tracking phase slow variations of Δτ are tracked keeping Δτ*ₑ* to a desirable small value.

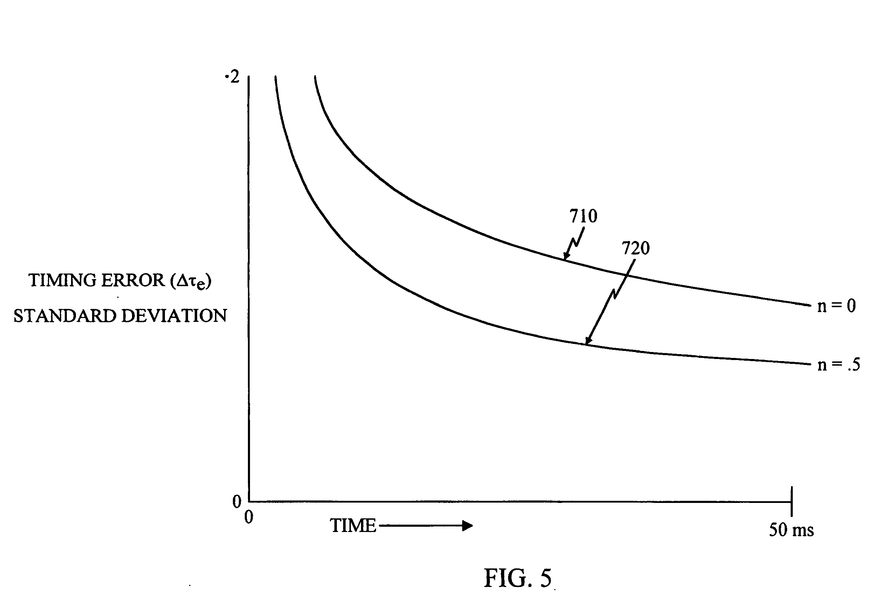

Figure 5 is a graph illustrating a comparison of the standard deviation of residual timing error Δτ*ₑ* for a TTL using 50% overlapped accumulations, *i*.*e*. 50% overlapped sample groups, and a TTL using disjoint accumulations (*i*.*e*., 0% overlap). As discussed above, the overlapping percentage P may be adjusted by the TTL system design to any percentage and is not limited to the examples discussed herein.

Curve 710 illustrates the standard deviation of a TTL system using 50% overlapped accumulations in calculating a timing error. Thus, in an embodiment using 64 samples per accumulation and an overlap percentage P = 50%, the latter 32 samples of each accumulation will be overlapped by the first 32 samples of each subsequent accumulation, respectively. Curve 720 illustrates the standard deviation of a TTL system using disjoint accumulations, *i*.*e*., P = 0%, in calculating a timing error. Thus, in an embodiment using 64 samples per accumulation and an overlap percentage P = 0%, the 64 samples of each accumulation are followed by each subsequent accumulation, but no overlapping of samples occurs. As discussed above, and is seen in Figure 7, the use of overlapping accumulations may decrease the standard deviation of the residual timing error Δτ*ₑ* compared to TTL's using disjoint sample accumulations.

Those of skill in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill will further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a mobile station, base station, or base station controller. In the alternative, the processor and the storage medium may reside as discrete components in a mobile station, base station, or base station controller.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the scope of the invention. Thus, the invention is not intended to be limited to the embodiments shown herein but is to be accorded the widest scope consistent with the claims.

## Claims

1. A method of tracking a received communication signal, comprising:
accumulating (330) a plurality of samples of said received communication signal so as to form a plurality of sample groups, wherein each of said sample groups comprises a predetermined number of samples;
overlapping (330) predetermined portions of adjacent sample groups; and
determining (340) a timing error based on said overlapped sample groups.

2. The method of Claim 1, wherein said received communication signal is a CDMA reverse pilot signal.

3. A method of decreasing the standard deviation of a residual timing error in a time tracking loop (400), comprising the method of claim 1 and further comprising:
periodically sampling (320) said received communication signal to produce said plurality of samples;
storing (330) at least some of said samples in a memory so as to form a plurality of accumulations corresponding to said plurality of sample groups, wherein each accumulation comprises K samples;
wherein said overlapping (330) comprises overlapping adjacent accumulations in said memory by an overlap factor P;
determining (340) a timing adjustment based on said overlapping accumulations; and
adjusting (340) a timing of said received communication signal according to said timing adjustment.

4. The method of Claim 3, wherein said communication signal is a spread spectrum communication signal.

5. The method of Claim 4, wherein said communication signal is a CDMA reverse pilot signal.

6. The method of Claim 3, wherein K is in the range of about 32 to 512.

7. The method of Claim 3, wherein P is in the range of about 25% to 75%.

8. The method of Claim 7, wherein P is about 50%.

9. The method of Claim 8, further comprising:
creating an early overlapping accumulation signal having a timing of about one half chip earlier than said received communication signal; and
creating a late overlapping accumulation signal having a timing of about one half chip later than said received communication signal.

10. The method of Claim 9, wherein the act of determining comprises:
comparing the energy of said early overlapping accumulation signal and said late overlapping accumulation signal in order to determine said timing adjustment.

11. The method of Claim 9, wherein the act of determining comprises:
comparing the magnitude of said early overlapping accumulation signal and said late overlapping accumulation signal in order to determine said timing adjustment.

12. A system (400) for tracking a received communication signal, comprising:
an accumulator configured to form a plurality of accumulations (410) of a predetermined number of signal samples, said accumulator combining adjacent accumulations so that predetermined portions of adjacent accumulations are overlapped; and
a timing discriminator (450) configured to determine a timing error based on said overlapped accumulations (410).

13. The system of Claim 12, wherein said received communication signal is a spread spectrum signal, said system further comprising:
a despreader (206) configured to despread said received communication signal using a psuedo-noise offset associated with said timing error.

14. A system of tracking a timing error in a spread spectrum communication system comprising the system of claim 12, wherein said timing error is a difference between a timing characteristic of said received communication signal and a timing indicator of a receiving unit, the system further comprising:
means (208) for sampling said received communication signal to produce a plurality of samples;
means for storing at least some of said samples in a memory so as to form said plurality of accumulations, wherein each accumulation comprises said predetermined number of samples;
means (212) for overlapping predetermined portions of adjacent accumulations so as to form a plurality of overlapping accumulations; and
means (214, 216, 218) for determining said timing error based on said overlapping accumulations.

15. The system of Claim 14, wherein said received communication signal is a CDMA signal.

16. The system of Claim 14, wherein said predetermined portion is about fifty percent (50%).

17. The system of Claim 14, wherein each accumulation comprises a predetermined number of consecutive samples.

18. The system of claim 12 comprising a signal processor for receiving said spread spectrum communication signal having a timing mechanism that is offset by said timing error, the signal processor comprising:
a sampling module (208) configured to sample said received communication signal and create said plurality of sample accumulations, each of the sample accumulations comprising said predetermined number of samples, wherein predetermined portions of adjacent sample accumulations are overlapped;
an advance module (210) configured to create an early communication signal derived from said plurality of overlapping accumulations;
a retard module (211) configured to create a late communication signal derived from said plurality of overlapping accumulations ; and
a timing discriminator (214, 216,218) configured to measure the energy difference between said early and late communication signals and, in response thereto, determine a timing error.

19. The signal processor of Claim 18 wherein said timing error is used to offset said timing mechanism.

20. The signal processor of Claim 18 wherein said early communication signal is about one half chip earlier than said received communication signal.

21. The signal processor of Claim 18 wherein said late communication signal is about one half chip later than said received communication signal.

22. The signal processor of Claim 18, wherein said received communication signal is a CDMA signal.

23. The signal processor of Claim 18, wherein said received communication signal is a CDMA 2000 reverse pilot signal.

24. The system of claim 12 comprising a signal processor having a timing mechanism that is offset by said timing error, the signal processor comprising:
a sampler (208) configured to obtain a plurality of samples of said received communication signal;
an accumulator configured to create a plurality of sample groups corresponding to said plurality of accumulations comprising said predetermined number of said plurality of samples, said accumulator overlapping predetermined portions of adjacent sample groups so as to form an on-time signal comprising a plurality of overlapping sample groups;
an advance module (210) configured to create an early signal derived from said plurality of overlapping sample groups;
a retard module (211) configured to create a late signal derived from said plurality of overlapping sample groups; and
a timing discriminator (214, 216, 218) configured to measure the energy difference between said early and late communication signals and, in response thereto, determine said timing error.

25. The signal processor of Claim 24, wherein said timing error is used to offset said timing mechanism.

26. The signal processor of Claim 24, wherein said early communication signal is less than one chip earlier than said on-time signal and said late communication signal is less than one chip later than said on-time signal.

27. The signal processor of Claim 24, wherein said communication signal is a spread spectrum signal.

28. The signal processor of Claim 24, wherein said predetermined number is in the range of about 32 to 512.

29. The signal processor of Claim 24, wherein said predetermined number is in the range of about 32 to 512.

## Patentansprüche

1. Ein Verfahren zum Nachführen bzw. Verfolgen eines empfangenen Kommunikationssignals, wobei das Verfahren aufweist:
Akkumulieren (330) einer Vielzahl von Abtastungen bzw. Abtastwerten von dem empfangenen Kommunikationssignal, um eine Vielzahl von Abtastgruppen zu bilden, wobei jede von den Abtastgruppen eine vorbestimmte Anzahl von Abtastungen aufweist;
Überlappen (330) vorbestimmter Abschnitte von benachbarten Abtastgruppen; und
Bestimmen (340) eines Timing- bzw. Zeitsteuerungsfehlers basierend auf den überlappten Abtastgruppen.

2. Verfahren nach Anspruch 1, wobei das empfangene Kommunikationssignal ein CDMA Reverse- bzw. Rückwärtsverbindungspilotsignal ist.

3. Ein Verfahren zum Verringern der Standardabweichung von einem Resttimingfehler in einer Zeitnachführschleife (400), das Verfahren nach Anspruch 1 aufweisend, und wobei das Verfahren ferner aufweist:
periodisches Abtasten (320) des empfangenen Kommunikationssignals zum Erzeugen der Vielzahl von Abtastungen bzw. Abtastwerten;
Speichern (330) wenigstens einiger der Abtastungen in einem Speicher um eine Vielzahl von Akkumulationen entsprechend der Vielzahl von Abtastgruppen zu bilden, wobei jede Akkumulation K Abtastungen aufweist;
wobei das Überlappen (330) Überlappen benachbarter Akkumulationen in dem Speicher um einen Überlappungsfaktor P aufweist;
Bestimmen (340) einer Timing-Anpassung basierend auf den Überlappungs-Akkumulationen; und
Einstellen bzw. Anpassen (340) von einem Timing von dem empfangenen Kommunikationssignal gemäß der Timing-Anpassung.

4. Verfahren nach Anspruch 3, wobei das Kommunikationssignal ein Spreizspektrum-Kommunikationssignal ist.

5. Verfahren nach Anspruch 4, wobei das Kommunikationssignal ein CDMA Reverse- bzw. Rückwärtsverbindungspilotsignal ist.

6. Verfahren nach Anspruch 3, wobei K in dem Bereich von ungefähr 32 bis 512 ist.

7. Verfahren nach Anspruch 3, wobei P in dem Bereich von 25 % bis 75 % ist.

8. Verfahren nach Anspruch 7, wobei P ungefähr 50 % ist.

9. Verfahren nach Anspruch 8, das ferner aufweist:
Kreieren eines early bzw. frühen Überlappungsakkumulationssignals, das ein Timing von ungefähr einem halben Chip früher als das empfangene Kommunikationssignal besitzt; und
Kreieren eines late bzw. späten Überlappungsakkumulationssignals, das ein Timing von ungefähr einem halben Chip später als das empfangene Kommunikationssignal besitzt.

10. Verfahren nach Anspruch 9, wobei der Akt des Bestimmens aufweist:
Vergleichen der Energie von dem frühen Überlappungsakkumulationssignal und dem späten Überlappungsakkumulationssignal um die Timing-Einstellung bzw. -Anpassung zu bestimmen.

11. Verfahren nach Anspruch 9, wobei der Akt des Bestimmens aufweist:
Vergleichen der Größe von dem frühen Überlappungsakkumulationssignal und dem späten Überlappungsakkumulationssignal um die Timing-Einstellung zu bestimmen.

12. Ein System (400) zum Nachführen bzw. Verfolgen eines empfangenen Kommunikationssignals, wobei das System aufweist:
einen Akkumulator konfiguriert zum Bilden einer Vielzahl von Akkumulationen (410) von einer vorbestimmten Anzahl von Signaltastungen bzw. -abtastungen, wobei der Akkumulator benachbarte Akkumulationen kombiniert, so dass vorbestimmte Abschnitte von benachbarten Akkumulationen überlappt werden; und
einen Timing- bzw. Zeitsteuerungsdiskriminator (450) konfiguriert zum Bestimmen eines Timing-Fehlers basierend auf den überlappten Akkumulationen (410).

13. System nach Anspruch 12, wobei das empfangene Kommunikationssignal ein Spreizspektrumsignal ist, wobei das System ferner aufweist:
einen Entspreizer (206) konfiguriert zum Entspreizen des empfangenen Kommunikationssignals unter Verwendung eines Pseudo-Rauschversatzes, assoziiert mit dem Timing-Fehler.

14. Ein System zum Nachführen eines Timing-Fehlers in einem Spreizspektrum-Kommunikationssystem, dass das System nach Anspruch 12 aufweist, wobei der Timing-Fehler eine Differenz zwischen einer Timing-Charakteristik von dem empfangenen Kommunikationssignal und einem Timing-Indikator von einer Empfangseinheit ist, wobei das System ferner aufweist:
Mittel (208) zum Abtasten des empfangenen Kommunikationssignals, um eine Vielzahl von Abtastungen bzw. Abtastwerten zu erzeugen;
Mittel zum Speichern von wenigstens einigen von den Abtastungen in einem Speicher um eine Vielzahl von Akkumulationen zu bilden, wobei jede Akkumulation die vorbestimmte Anzahl von Tastungen aufweist;
Mittel (212) zum Überlappen von vorbestimmten Abschnitten von benachbarten Akkumulationen um eine Vielzahl von überlappenden Akkumulationen zu bilden; und
Mittel (214, 216, 218) zum Bestimmen des Timing-Fehlers basierend auf den überlappenden Akkumulationen.

15. System nach Anspruch 14, wobei das empfangene Kommunikationssignal ein CDMA Signal ist.

16. System nach Anspruch 14, wobei der vorbestimmte Abschnitt ungefähr fünfzig Prozent (50 %) ist.

17. System nach Anspruch 14, wobei jede Akkumulation eine vorbestimmte Anzahl von aufeinanderfolgenden Abtastungen aufweist.

18. System nach Anspruch 12, das einen Signalprozessor aufweist zum Empfangen des Spreizspektrum-Kommunikationssignals, einen Timing-Mechanismus besitzend, der um den Timing-Fehler versetzt ist, wobei der Signalprozessor aufweist:
ein Abtastmodul (208), konfiguriert zum Abtasten des empfangenen Kommunikationssignals, und zum Kreieren der Vielzahl von Abtastakkumulationen, wobei jede von den Abtastakkumulationen die vorbestimmte Anzahl von Abtastungen aufweist, wobei vorbestimmte Abschnitte von benachbarten Abtastakkumulationen überlappt sind;
ein Beschleunigungsmodul (210), konfiguriert zum Erzeugen eines frühen bzw. early Kommunikationssignals, abgeleitet von der Vielzahl von überlappenden Akkumulationen;
ein Verzögerungsmodul (211) konfiguriert zum Erzeugen eines späten bzw. late Kommunikationssignals, abgeleitet von der Vielzahl von überlappenden Akkumulationen; und
einen Timing-Diskriminator (214, 216, 218) konfiguriert zum Messen der Energie-Differenz zwischen den frühen und späten Kommunikationssignalen und ansprechend darauf, Bestimmen eines Timing-Fehlers.

19. Signalprozessor nach Anspruch 18, wobei der Timing-Fehler genutzt wird zum Versetzen von dem Timing-Mechanismus.

20. Signalprozessor nach Anspruch 18, wobei das frühe Kommunikationssignal ungefähr eine halben Chip früher als das empfangene Kommunikationssignal ist.

21. Signalprozessor nach Anspruch 18, wobei das späte Kommunikationssignal ungefähr eine halben Chip später als das empfangene Kommunikationssignal ist.

22. Signalprozessor nach Anspruch 18, wobei das empfangene Kommunikationssignal ein CDMA Signal ist.

23. Signalprozessor nach Anspruch 18, wobei das empfangene Kommunikationssignal ein CDMA 2000 Rückwärtsverbindungs- bzw. Reverse-Pilotsignal ist.

24. System nach Anspruch 12, das einen Signalprozessor aufweist, der einen Timing-Mechanismus besitzt, der um den Timing-Fehler versetzt ist, wobei der Signalprozessor aufweist:
einen Abtaster (208), konfiguriert zum Erlangen einer Vielzahl von Abtastungen von dem empfangenen Kommunikationssignal;
einen Akkumulator konfiguriert zum Kreieren einer Vielzahl von Abtastgruppen entsprechend der Vielzahl von Akkumulationen, die die vorbestimmte Anzahl von der Vielzahl von Tastungen aufweisen, wobei der Akkumulator vorbestimmte Abschnitte von benachbarten Abtastgruppen überlappt, um ein On-Time- bzw. pünktliches Signal zu bilden, das eine Vielzahl von überlappenden Abtastgruppen aufweist;
ein Beschleunigungsmodul (210), konfiguriert zum Kreieren eines frühen bzw. voreilenden Signals, abgeleitet von der Vielzahl von überlappenden Abtastgruppen;
ein Verzögerungsmodul (211), konfiguriert zum Kreieren eines späten bzw. nacheilenden Signals, abgeleitet von der Vielzahl von überlappenden Abtastgruppen; und
einen Timing-Diskriminator (214, 216, 218) konfiguriert zum Messen der Energie-Differenz zwischen den frühen und späten Kommunikationssignalen und, ansprechend darauf, Bestimmen eines Timing-Fehlers.

25. Signalprozessor nach Anspruch 24, wobei der Timing-Fehler genutzt wird zum Versetzen von dem Timing-Mechanismus.

26. Signalprozessor nach Anspruch 24, wobei das frühe Kommunikationssignal weniger als ein Chip vor dem pünktlichen Signal ist, und das späte Kommunikationssignal weniger als ein Chip nach dem pünktlichen Signal ist.

27. Signalprozessor nach Anspruch 24, wobei das Kommunikationssignal ein Spreizspektrumssignal ist.

28. Signalprozessor nach Anspruch 24, wobei die vorbestimmte Zahl in dem Bereich von ungefähr 32 bis 512 ist.

29. Signalprozessor nach Anspruch 24, wobei die vorbestimmte Zahl in dem Bereich von ungefähr 32 bis 512 ist.

## Revendications

1. Procédé de poursuite d'un signal de communication reçu, comprenant les étapes suivantes :
accumuler (330) une pluralité d'échantillons du signal de communication reçu de façon à former une pluralité de groupes d'échantillons, chaque groupe d'échantillons comprenant un nombre prédéterminé d'échantillons ;
mettre en chevauchement (330) des portions prédéterminées de groupes d'échantillons adjacents ; et
déterminer (340) une erreur temporelle sur la base des groupes d'échantillons en chevauchement.

2. Procédé selon la revendication 1, dans lequel le signal de communication reçu est un signal pilote inverse CDMA.

3. Procédé pour diminuer l'écart type d'une erreur temporelle résiduelle dans une boucle de poursuite temporelle (400), comprenant le procédé de la revendication 1 et comprenant en outre les étapes suivantes :
échantillonner périodiquement (320) le signal de communication reçu pour produire ladite pluralité d'échantillons ;
mémoriser (330) au moins certains desdits échantillons dans une mémoire de façon à former une pluralité d'accumulations correspondant à la pluralité de groupes d'échantillons, chaque accumulation comprenant K échantillons ;
dans lequel ledit chevauchement (330) comprend le chevauchement d'accumulations adjacentes dans la mémoire avec un facteur de chevauchement P ;
déterminer (340) un ajustement temporel sur la base des accumulations en chevauchement ; et
ajuster (340) une position temporelle du signal de communication reçu selon ledit ajustement temporel.

4. Procédé selon la revendication 3, dans lequel le signal de communication est un signal de communication à étalement de spectre.

5. Procédé selon la revendication 4, dans lequel le signal de communication est un signal pilote inverse CDMA.

6. Procédé selon la revendication 3, dans lequel K est dans une plage d'environ 32 à 512.

7. Procédé selon la revendication 3, dans lequel P est dans une plage d'environ 25 % à 75 %.

8. Procédé selon la revendication 7, dans lequel P est environ égal à 50 %.

9. Procédé selon la revendication 8, comprenant en outre les étapes suivantes :
créer un signal d'accumulation à chevauchement avancé ayant une position temporelle en avance d'environ un demi élément de code par rapport au signal de communication reçu ; et
créer un signal d'accumulation à chevauchement retardé ayant une position temporelle en retard d'environ un demi élément de code par rapport au signal de communication reçu.

10. Procédé selon la revendication 9, dans lequel l'action de détermination comprend l'étape suivante :
comparer l'énergie du signal d'accumulation à chevauchement avancé et celle du signal d'accumulation à chevauchement retardé pour déterminer l'ajustement temporel.

11. Procédé selon la revendication 9, dans lequel l'action de détermination comprend l'étape suivante :
comparer l'amplitude du signal d'accumulation à chevauchement avancé et celle du signal d'accumulation à chevauchement retardé afin de déterminer l'ajustement temporel.

12. Système (400) pour la poursuite d'un signal de communication reçu, comprenant :
un accumulateur agencé pour former une pluralité d'accumulations (410) d'un nombre prédéterminé d'échantillons de signal, l'accumulateur combinant des accumulations adjacentes de telle sorte que des portions prédéterminées d'accumulations adjacentes soient en chevauchement ; et
un discriminateur temporel (450) agencé pour déterminer une erreur temporelle sur la base des accumulations en chevauchement (410).

13. Système selon la revendication 12, dans lequel le signal de communication reçu est un signal à étalement de spectre, le système comprenant en outre :
un dispositif de désétalement (206) agencé pour désétaler le signal de communication reçu en utilisant un décalage de bruit pseudo-aléatoire associé à ladite erreur temporelle.

14. Système de poursuite d'une erreur temporelle dans un système de communication à étalement de spectre comprenant le système de la revendication 12, dans lequel l'erreur temporelle est une différence entre une caractéristique temporelle du signal de communication reçu et un indicateur temporel d'un module récepteur, le système comprenant en outre :
des moyens (208) pour échantillonner le signal de communication reçu pour produire une pluralité d'échantillons ;
des moyens pour mémoriser au moins certains des échantillons dans une mémoire de façon à former ladite pluralité d'accumulations, chaque accumulation comprenant le nombre prédéterminé d'échantillons ;
des moyens (212) pour mettre en chevauchement des portions prédéterminées d'accumulations adjacentes de façon à former une pluralité d'accumulations en chevauchement ; et
des moyens (214, 216, 218) pour déterminer l'erreur temporelle sur la base des accumulations en chevauchement.

15. Système selon la revendication 14, dans lequel le signal de communication reçu est un signal CDMA.

16. Système selon la revendication 14, dans lequel la portion prédéterminée est d'environ cinquante pourcent (50 %).

17. Système selon la revendication 14, dans lequel chaque accumulation comprend un nombre prédéterminé d'échantillons consécutifs.

18. Système selon la revendication 12, comprenant un processeur de signal destiné à recevoir le signal de communication à étalement de spectre, comportant un mécanisme temporel qui est décalé de l'erreur temporelle, le processeur de signal comprenant :
un module d'échantillonnage (208) agencé pour échantillonner le signal de communication reçu et créer ladite pluralité d'accumulations d'échantillons, chacune des accumulations d'échantillons comprenant le nombre prédéterminé d'échantillons, des portions prédéterminées d'accumulations d'échantillons adjacentes étant mises en chevauchement ;
un module d'avance (210) agencé pour créer un signal de communication avancé dérivé de la pluralité d'accumulations en chevauchement ;
un module de retard (211) agencé pour créer un signal de communication retardé dérivé de la pluralité d'accumulations en chevauchement ; et
un discriminateur temporel (214, 216, 218) agencé pour mesurer la différence d'énergie entre les signaux de communication avancé et retardé et, en réponse à cela, déterminer une erreur temporelle.

19. Processeur de signal selon la revendication 18, dans lequel l'erreur temporelle est utilisée pour décaler le mécanisme temporel.

20. Processeur de signal selon la revendication 18, dans lequel le signal de communication avancé est en avance d'environ un demi élément de code par rapport au signal de communication reçu.

21. Processeur de signal selon la revendication 18, dans lequel le signal de communication retardé est en retard d'environ un demi élément de code par rapport au signal de communication reçu.

22. Processeur de signal selon la revendication 18, dans lequel le signal de communication reçu est un signal CDMA.

23. Processeur de signal selon la revendication 18, dans lequel le signal de communication reçu est un signal pilote inverse CDMA 2000.

24. Système selon la revendication 12, comprenant un processeur de signal comportant un mécanisme temporel qui est décalé de l'erreur temporelle, le processeur de signal comprenant :
un échantillonneur (208) agencé pour obtenir une pluralité d'échantillons du signal de communication reçu ;
un accumulateur agencé pour créer une pluralité de groupes d'échantillons correspondant à la pluralité d'accumulations comprenant le nombre prédéterminé de ladite pluralité d'échantillons, l'accumulateur mettant en chevauchement des portions prédéterminées de groupes d'échantillons adjacents de façon à former un signal à temps exact comprenant une pluralité de groupes d'échantillons en chevauchement ;
un module d'avance (210) agencé pour créer un signal avancé déduit de la pluralité de groupes d'échantillons en chevauchement ;
un module de retard (211) agencé pour créer un signal retardé déduit de la pluralité de groupes d'échantillons en chevauchement ; et
un discriminateur temporel (214, 216, 218) agencé pour mesurer la différence d'énergie entre les signaux de communication en avance et en retard et, en réponse à cela, déterminer ladite erreur temporelle.

25. Processeur de signal selon la revendication 24, dans lequel l'erreur temporelle est utilisée pour décaler le mécanisme temporel.

26. Processeur de signal selon la revendication 24, dans lequel le signal de communication avancé est en avance de moins d'un élément de code par rapport au signal à temps exact et le signal de communication retardé est en retard de moins d'un élément de code par rapport au signal à temps exact.

27. Processeur de signal selon la revendication 24, dans lequel le signal de communication est un signal à étalement de spectre.

28. Processeur de signal selon la revendication 24, dans lequel le nombre prédéterminé est dans une plage d'environ 32 à 512.

29. Processeur de signal selon la revendication 24, dans lequel le nombre prédéterminé est dans une plage d'environ 32 à 512.
